# EUROPEAN PATENT SPECIFICATION

(11) **EP 0 838 096 B1**
(45) Date of publication and mention of the grant of the patent: **22.08.2001**
(21) Application number: 97915691.6
(22) Date of filing: 10.04.1997
(51) Int. Cl.: H01M 4/52

(54) **LITHIUM COBALT OXIDE CATHODIC ACTIVE MATERIAL AND SECONDARY BATTERY USING THE SAME**
KATHODISCHES LITHIUM-KOBALTOXYD-AKTIVMATERIAL UND VERWENDUNG IN EINER SEKUNDÄRBATTERIE
MATERIAU CATHODIQUE ACTIF A L'OXYDE DE COBALT ET DE LITHIUM ET BATTERIE D'ACCUMULATEURS DANS LAQUELLE IL EST UTILISE

(30) Priority: 16.04.1996 JP 9399596
(43) Date of publication of application: 29.04.1998
(73) Proprietor: MATSUSHITA ELECTRIC INDUSTRIAL CO., LTD., Kadoma-shi, Osaka 571-8501 (JP)
(72) Inventor: INOUE, Kaoru, Osaka 570 (JP); OURA, Takafumi, Osaka 572 (JP); MURAI, Hiroyuki, Osaka 573 (JP); KOSHINA, Hizuru, Osaka 572 (JP)
(74) Representative: Crawford, Andrew Birkby
(86) International application number: JP9701226
(87) International publication number: WO9739489

(56) References cited:
- EP-A- 0 709 906
- EP-A- 0 718 902
- EP-A- 0 744 780
- US-A- 5 487 960

## Description

### Technical Field

The present invention relates to an active material used in the positive electrode of a battery, and a secondary battery using this active material.

### Background Art

Recently, AV appliances, personal computers and other electronic appliances are in a rapid progress in portable and cordless trend. As the power source for driving them, there is a mounting demand for secondary battery of small size, light weight, and high energy density. Among them, the non-aqueous electrolyte secondary battery using lithium as active material for the negative electrode is particularly expected highly as the battery having high voltage and high energy density. In this battery, conventionally, lithium metal was used in the negative electrode and MnO₂, V₂O₅ or the like in the positive electrode, and a battery of 3 V class was realized. In this type of battery, however, since the reactivity of lithium metal of the negative electrode and the electrolyte was high, there was a risk of heat generation or even fire when placed in high temperature environments.

It was hence proposed to use carbon material capable of intercalating and deintercalating lithium reversibly as the negative electrode of the battery. This type of battery is called lithium ion secondary cell. In this cell, the positive electrode is composed of metal oxide containing lithium such as LiCoO₂, LiNiO₂, or LiMn₂0₄, and a battery of 4 V class is realized.

When LiCoO₂ is used in the positive electrode, the charge and discharge utilization range of the positive electrode is about 3.2 V to 4.2 V with respect to the oxidation and reduction potential of lithium. In terms of electric capacity, it is about 55% of theoretical capacity of LiCoO₂.

When the region of 4.2 V or more of the cathodic potential is utilized in charge and discharge reaction, a voltage of a higher capacity can be designed. However, when the cathodic potential is lowered, thermal stability of the positive electrode is lowered, and when the battery is placed in high temperature environments, there was a problem of lowering of safety such as heat generation or fire of the battery.

It is hence an object of the invention to solve the above problems, and present a battery of large capacity, excellent discharge efficiency, and high safety in high temperature environments,

### Disclosure of the Invention

The present invention provides an active material for use in a positive electrode of a battery having said lithium cobalt oxide being composed of lithium, cobalt, and oxygen, wherein said lithium cobalt oxide is powder having a mean particle size in a range of 5*µ*m to 25 *µ*m, said lithium cobalt oxide has a chemical composition in which the molar ratio of said cobalt to said lithium is in a range of 0.96 to 1.04, and said lithium cobalt oxide has a crystallinity so that the full width of half maximum of 003 diffraction peak in X-ray diffraction using CuKα ray is in a range of 0.15 ° to 0.18°.

The present invention also provides a secondary battery comprising a positive electrode having lithium cobalt oxide composed of lithium, cobalt and oxygen, a negative electrode capable of intercalating and deintercalating the lithium, and an electrolyte, wherein said lithium cobalt oxide is powder, said powder has a mean particle size in a range of 5*µ*m to 25*µ*m, said lithium cobalt oxide has a chemical composition in which the molar ratio of said cobalt to said lithium is in a range of 0.96 to 1.04, and said lithium cobalt oxide has a crystallinity so that the full width of half maximum of 003 diffraction peak in X-ray diffraction using CuKα ray is in a range of 0.15 ° to 0.18°.

Preferably, the electrolyte is a non-aqueous electrolyte.

More preferably, the potential of the positive electrode in charged state is in a range of 4.2 V to 4.5 V to the redox potential of lithium.

More preferably, the positive electrode of the secondary battery comprises the powder of the lithium cobalt oxide, bonding means for bonding the powder, and means for increasing the conductivity.

More preferably, the lithium cobalt oxide is produced by the reaction of Li₂CO₃ and Co₃O₄, and the molar ratio of Co in Co₃O₄ to Li in Li₂CO₃ is in a range of 0.96 to 1.04.

In this constitution, the secondary battery having various performances including extremely large electric capacity, excellent discharge efficiency, high voltage, and freedom from risk such as fire in high temperature environments is obtained.

### Brief Description of the Drawing

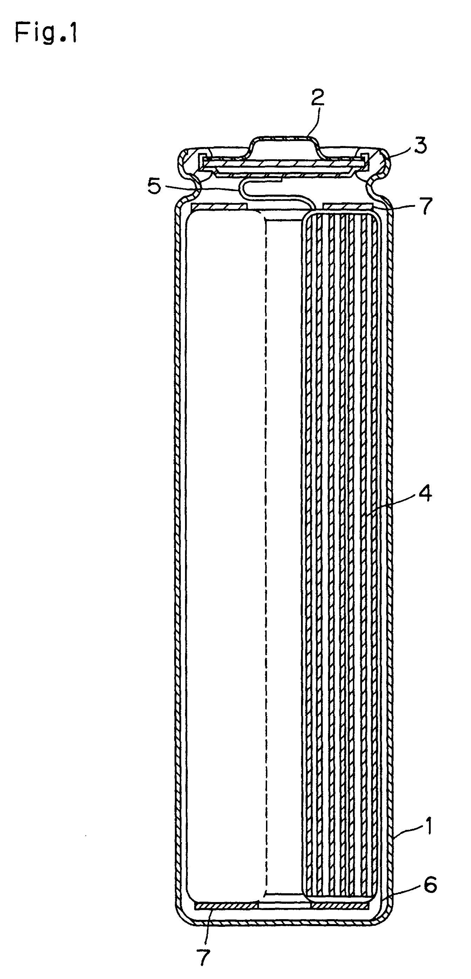

Fig. 1 is a longitudinal sectional view of a secondary battery in an embodiment of the invention.

### Best Mode for Carrying Out the Invention

Referring now to the drawing, a preferred embodiment of the invention is described below.

Powder of Li₂CO₃ and powder of Co₃O₄ were mixed at a molar ratio of Co to Li of 0.94, 0.96, 1.00, 1.04, and 1.06. These mixtures were heat treated at temperature of 800 and 900°C for 5 and 10 hours. Thus, lithium cobalt oxide was synthesized. As for Co₃O₄, powder with mean particle size of 2, 5, 10, 15, 20, and 25 *µ* m was used. In thus obtained powder of lithium cobalt oxide, the crystallinity and particle size distribution were measured. Lithium cobalt oxide is expressed in a general chemical formula of LiCoO₂. The crystallinity was judged by powder X-ray diffraction measurement.

In powder X-ray diffraction measurement, a rotary pair cathode type X-ray generating apparatus was employed, and an output of 1.6 kW was generated at tube voltage of 40 kV and tube current of 40 mA, and CuK α ray was used. The CuK α ray was emitted to the sample on a sample holder through a soller slit of wide-angle goniometer and a divergence slit (opening angle 1 degree). The diffraction ray generated by this emission was passed through a scattering slit (opening angle 1 degree), a soller slit, and a receiving slit (opening width 0.15 mm), and was further passed through a single crystal curved monochromator (using graphite 0002 plane, curvature rate 2224 mmR) using pyrolysis graphite to be transformed to be monochromatic, and it was further passed through a monochromator receiving slit (opening width 0.6 mm), and was counted by a scintillation counter. The measuring condition was scan speed of 10 degrees/minute, and sampling width of 0.02 deg., and it was measured in a range of 2θ = 10 to 80 deg. The obtained diffraction data was smoothed by the moving average method proposed by Savitzky and Golay, and the background was removed by the method proposed by Sonnevelt and Visser. After removal of CuK α₂ peak by modified Rachinger method, the full width of half maximum of 003 diffraction peak was determined.

The particle size distribution was measured by the laser diffraction method. As the measuring cell, a flow cell was used, and the light source was a semiconductor laser of wavelength of 780 nm and output of 3 mW, and the diffraction light was received by a silicon photo cell. As the solvent for dispersing the sample, distilled water was used, and 0.2% sodium hexametaphosphate was added as dispersing agent. The particle size distribution was determined by the method of least squares according to Fraunhofer's theory or Mie's theory, and the particle size at cumulative volume of 50% was determined as the mean particle size.

The test using the battery is described specifically below. Fig. 1 shows a longitudinal sectional view of a cylindrical battery used in the embodiment. In the drawing, reference numeral 1 is a battery case made of stainless steel resistant to organic electrolyte, and a sealing plate 2 having a safety valve is disposed at the opening of the battery case 1 through an insulating packing. The positive electrode and negative electrode of a plate group 4 are wound spirally plural times through a separator, and put in the case 1. From the positive electrode, a positive electrode lead 5 is drawn out and connected to the sealing plate 2, and from the negative electrode, a negative electrode lead 6 is drawn out and connected to the bottom of the battery case 1. An insulating ring 7 is provided in upper and lower parts of the plate group 4.

Thus obtained powder of lithium cobalt oxide and 3 wt.% of acetylene black were mixed, and this mixture and 7 wt.% of fluoride resin binder were suspended in an aqueous solution of carboxymethyl cellulose to be prepared in a paste form. This paste was applied on both sides of an aluminum foil of 0.03 mm in thickness, dried, and rolled, and a positive electrode plate of 0.18 mm in thickness, 51 mm in width, and 400 mm in length was obtained. The binder is bonding means for bonding the powder of lithium cobalt oxide. The acetylene black is an additive aid for increasing the conductivity.

As the negative electrode, mesophase carbon spherules were heat treated at high temperature of 2800°C to transform into graphite (called mesophase graphite). This mesophase graphite and 5 wt.% of styrene/butadiene rubber were mixed, and suspended in an aqueous solution of carboxymethyl cellulose to be prepared in a paste form. This paste was applied on both sides of a copper foil of 0.02 mm in thickness, dried and rolled, and a negative electrode plate of 0.20 mm in thickness, 53 mm in width, and 420 mm in length was obtained.

An aluminum lead was attached to the positive electrode plate, and a nickel lead was attached to the negative electrode plate, and the positive electrode plate and negative electrode plate were spirally wound through a polypropylene separator of 0.025 mm in thickness, 59 mm in width, and 1100 mm in length, and put in a battery case of 18.0 mm in diameter and 65 mm in height. The electrolyte was a non-aqueous electrolyte prepared by dissolving 1 mole/liter of LiPF₆ in a solvent mixing ethylene carbonate (EC), diethyl carbonate (DEC), and methyl propionate (MP) at a ratio by volume of 30:50:20. This electrolyte was poured into the case, and then the opening of the case was sealed. Thus, a secondary battery was fabricated.

Two cells each of the fabricated battery were prepared and presented for charge and discharge test. The charge and discharge test was conducted at 20°C. Charge was constant voltage charging of charging voltage of 4.2 V, limiting current of 800 mA, and charging time of 3 hours. Discharge was constant current discharging of discharging current of 2000 mA and discharge end voltage of 3.0 V. In the charged state of battery, by performing heating test (heating from room temperature to 150°C at a rate of 5°C per minute, holding 2 hours at 150°C), presence or absence of fire was investigated.

The mean particle size of powder of LiCoO₂ obtained in the embodiment, the full width of half maximum of 003 diffraction peak as crystallinity, and molar ratio of Co to Li in lithium cobalt oxide are shown in Table 1.

**[Table 1]**

| Co/Li molar ratio | Heat treated temperature | Heat treated time | Mean particle size of CO₂O₄ | | | | | | | | | | | |
|---|---|---|---|---|---|---|---|---|---|---|---|---|---|---|
| | | | 2 *µ*m | | 5 *µ*m | | 10 *µ*m | | 15 *µ*m | | 20 *µ*m | | 25 *µ*m | |
| | | | Mean particle size of LiCoO₂ | FWHM | Mean particle size of LiCoO₂ | FWHM | Mean particle size of LiCoO₂ | FWHM | Mean particle size of LiCoO₂ | FWHM | Mean particle size of LiCoO₂ | FWHM | Mean particle size of LiCoO₂ | FWHM |
| 0.94 | 800 | 5 | 3.1 | 0.18 | 5.5 | 0.18 | 10.3 | 0.18 | 15.5 | 0.18 | 23.2 | 0.18 | 27.8 | 0.18 |
| | | 10 | 3.5 | 0.18 | 6.0 | 0.18 | 11.0 | 0.18 | 16.3 | 0.18 | 24.8 | 0.18 | 29.0 | 0.18 |
| | 900 | 5 | 4.2 | 0.15 | 6.8 | 0.15 | 11.9 | 0.15 | 18.0 | 0.15 | 24.2 | 0.15 | 28.5 | 0.15 |
| | | 10 | 4.5 | 0.15 | 7.0 | 0.15 | 13.0 | 0.15 | 18.5 | 0.15 | 24.6 | 0.15 | 28.8 | 0.15 |
| 0.96 | 800 | 5 | 3.2 | 0.18 | 5.6 | 0.18 | 10.2 | 0.18 | 16.8 | 0.18 | 22.0 | 0.18 | 27.5 | 0.18 |
| | | 10 | 3.3 | 0.18 | 5.9 | 0.18 | 11.0 | 0.18 | 17.0 | 0.18 | 23.5 | 0.18 | 27.8 | 0.18 |
| | 900 | 5 | 4.0 | 0.15 | 6.1 | 0.15 | 11.9 | 0.15 | 17.1 | 0.15 | 23.5 | 0.15 | 28.1 | 0.15 |
| | | 10 | 4.0 | 0.15 | 6.5 | 0.15 | 12.6 | 0.15 | 17.5 | 0.15 | 24.0 | 0.15 | 28.3 | 0.15 |
| 1.00 | 800 | 5 | 2.6 | 0.18 | 5.4 | 0.18 | 10.2 | 0.18 | 15.4 | 0.18 | 21.0 | 0.18 | 26.2 | 0.18 |
| | | 10 | 2.8 | 0.18 | 5.5 | 0.18 | 10.8 | 0.18 | 15.5 | 0.18 | 22.0 | 0.18 | 26.4 | 0.18 |
| | 900 | 5 | 2.8 | 0.18 | 5.8 | 0.18 | 11.0 | 0.18 | 15.8 | 0.18 | 21.5 | 0.18 | 26.5 | 0.18 |
| | | 10 | 3.0 | 0.18 | 6.0 | 0.18 | 11.5 | 0.18 | 16.0 | 0.18 | 22.3 | 0.18 | 26.5 | 0.18 |
| 1.04 | 800 | 5 | 2.0 | 0.21 | 5.1 | 0.21 | 9.8 | 0.18 | 14.8 | 0.18 | 20.5 | 0.21 | 25.2 | 0.21 |
| | | 10 | 2.0 | 0.21 | 5.0 | 0.21 | 9.8 | 0.18 | 14.7 | 0.18 | 20.5 | 0.18 | 25.0 | 0.18 |
| | 900 | 5 | 2.1 | 0.18 | 5.2 | 0.18 | 9.8 | 0.18 | 14.8 | 0.18 | 20.6 | 0.18 | 25.2 | 0.18 |
| | | 10 | 2.0 | 0.18 | 5.3 | 0.18 | 10.0 | 0.18 | 14.8 | 0.18 | 20.5 | 0.18 | 25.2 | 0.18 |
| 1.06 | 800 | 5 | 1.9 | 0.21 | 5.2 | 0.21 | 9.6 | 0.21 | 14.7 | 0.21 | 20.5 | 0.21 | 25.1 | 0.21 |
| | | 10 | 2.0 | 0.21 | 5.1 | 0.21 | 9.8 | 0.21 | 14.6 | 0.21 | 20.5 | 0.21 | 25.3 | 0.21 |
| | 900 | 5 | 2.1 | 0.21 | 5.2 | 0.21 | 9.8 | 0.21 | 14.7 | 0.21 | 20.5 | 0.21 | 25.1 | 0.21 |
| | | 10 | 2.0 | 0.21 | 5.2 | 0.21 | 9.8 | 0.21 | 14.7 | 0.21 | 20.5 | 0.21 | 25.2 | 0.21 |

According to Table 1, the mean particle size of lithium cobalt oxide was classified into three categories, less than 5 *µ* m, 5 to 25 *µ* m, and more than 25 *µ* m. The full width of half maximum of 003 diffraction peak was classified into two categories. 0.15 to 0.18 deg. and 0.21 deg. or more. The mean particle size, full width of half maximum, molar ratio of Co to Li, discharge capacity as battery characteristic, and heating test results are summarized in Table 2. The discharge capacity is expressed as the average.

As the standard of heating test, Standard for Lithium Batteries UL 1642 is known, among others. According to this standard, "the battery is placed in a heating oven, and is heated up to 150°C at a rate of 5±2°C/min, being held at 150°C for 10 Bin., the battery should be free from rupture or fire." In this embodiment, no battery caused fire in this standard, and all firing cases were caused by leaving for 30 minutes or more, and there was no violent rupture.

**[Table 2]**

| Co/Li molar ratio | Mean particle size *µ* m | FWHM deg. | Heating test | Discharge capacity mAh | Evaluation |
|---|---|---|---|---|---|
| 0.94 | Less than 5 | 0.15~0.18 | Fire | 1150 | × |
| | 5 ~ 25 | 0.15~0.18 | No fire | 1140 | ○ |
| | More than 25 | 0.15~0.18 | No fire | 970 | × |
| 0.96 | Less than 5 | 0.15~0.18 | Fire | 1160 | × |
| | 5 ~ 25 | 0.15~0.18 | No fire | 1130 | ○ |
| | More than 25 | 0.15~0.18 | No fire | 960 | × |
| 1.00 | Less than 5 | 0.15~0.18 | Fire | 1120 | × |
| | 5 ~ 25 | 0.15~0.18 | No fire | 1090 | ○ |
| | More than 25 | 0.15~0.18 | No fire | 950 | × |
| 1.04 | Less than 5 | 0.15~0.18 | Fire | 1100 | × |
| | | 0.21 or more | Fire | 1090 | × |
| | 5 ~ 25. | 0.15~0.18 | No fire | 1070 | ○ |
| | | 0.21 or more | Fire | 1020 | × |
| | More than 25 | 0.15~0.18 | No fire | 930 | × |
| | | 0.21 or more | Fire | 920 | × |
| 1.06 | Less than 5 | 0.21 or more | Fire | 1010 | × |
| | 5 ~ 25 | 0.21 or more | Fire | 970 | × |
| | More than 25 | 0.21 or more | Fire | 900 | × |

In Table 2, the battery not causing fire in heating test and having discharge capacity of 1000 mAh is evaluated as ○, and the battery causing fire or having discharge capacity of less than 1000 mAh is evaluated as ×.

As for the charging voltage, the case of 4.2 V only is mentioned, but no fire was caused up to 4.5 V charging by using this positive electrode.

The following may be known from Table 1 and Table 2.

Concerning the mean particle size of lithium cobalt oxide as cathodic active material, by increasing the mean particle size, the heat generating speed becomes slower. However, when the mean particle size is increased, the discharge efficiency of the battery is lowered.

Concerning the crystallinity, when the crystallinity is higher, the heat generation starting temperature becomes higher, and the heat generation speed becomes slower. In this case, the discharge efficiency of the battery is hardly changed.

Concerning the ratio of Li and Co in the chemical composition of lithium cobalt oxide, as the molar ratio of Co to Li becomes smaller, the mean particle size of the cathodic active material becomes larger and the heat generation speed becomes slower. However, when samples with nearly same mean particle size are compared, the heat generation speed is nearly the same. As for the discharge characteristic of the battery, the discharge efficiency is enhanced as the molar ratio of Co to Li becomes smaller.

Concerning the voltage of the positive electrode, as the voltage becomes higher, the heat generation starting temperature declines.

Much is unknown about mechanism of heat generation of the positive electrode, but estimating the action of the invention from the above results, when the mean particle size of lithium cobalt oxide is large, it is considered that since the contact area between the cathodic active material and electrolyte is decreased, the heat generation speed becomes slower. As for crystallinity, estimating from the fact that the heat generation reaction of the positive electrode is a decomposition reaction of oxygen release type, when the crystallinity is low and there are defects in crystals, defect portions may serve as active points of heat generation reaction, so that the oxygen may be likely to be decomposed and released. As for the ratio of Li and Co, as the molar ratio of Co to Li becomes smaller, the mean particle size becomes larger, and hence it is considered that the heat generation speed is slower, and when compared between samples having same mean particle size, the heat generation speed was nearly the same. In the battery characteristics, as the molar ratio of Co to Li becomes smaller, the discharge efficiency is enhanced. This is considered because Co₃O₄ which is the impurity for impeding diffusion of Li ions is decreased.

Concerning the voltage of the positive electrode, when the voltage of the positive electrode is high, lithium ions decrease in lithium cobalt oxide which is a cathodic active material, and the crystal structure of lithium cobalt oxide becomes unstable, or the oxidation number of Co becomes higher, and it may lead to instability.

Hence, when the mean particle size of lithium cobalt oxide is in a range of 5*µ*m to 25*µ*m, the crystallinity is such that the full width of half maximum of 003 diffraction peak in powder X-ray diffraction using CuKα ray is in a range of 0.15 deg. to 0.18 deg., and the chemical composition of lithium cobalt oxide is such that the molar ratio of Co to Li is in a range of 0.96 to 1. 04, a secondary battery excellent in discharge efficiency, high in voltage, and high in safety in high temperature environments is obtained.

### Industrial Applicability

The secondary battery of the invention comprises a positive electrode having lithium cobalt oxide composed of lithium, cobalt and oxygen, a negative electrode capable of intercalating and deintercalating the lithium, and an electrolyte. The potential of the positive electrode in charged state is in a range of 4.2 V to 4.5 V to the oxidation and reduction potential of lithium. It simultaneously has performances such as extremely large electric capacity, excellent discharge efficiency, high voltage, and freedom from fire in high temperature environments.

### Reference Numerals

- 1: Battery case
- 2: Sealing plate
- 3: Insulating packing
- 4: Plate group
- 5: Positive electrode lead
- 6: Negative electrode lead
- 7: Insulating ring

## Claims

1. An active material for use in a positive electrode of a battery having lithium cobalt oxide being composed of lithium, cobalt, and oxygen. wherein said lithium cobalt oxide is powder having a mean particle size in a range of 5 *µ* m to 25 *µ* m, said lithium cobalt oxide has a chemical composition in which the molar ratio of said cobalt to said lithium is in a range of 0.96 to 1.04, and said lithium cobalt oxide has a crystallinity so that the full width of half maximum of 003 diffraction peak in X-ray diffraction using CuKα ray is in a range of 0.15° to 0.18°.

2. A secondary battery comprising a positive electrode having lithium cobalt oxide composed of lithium, cobalt and oxygen, a negative electrode capable of intercalating and deintercalating the lithium, and an electrolyte, wherein said lithium cobalt oxide is powder, said powder has a mean particle size in a range of 5 *µ* m to 25 *µ* m, said lithium cobalt oxide has a chemical composition in which the molar ratio of said cobalt to said lithium is in a range of 0.96 to 1.04, and said lithium cobalt oxide has a crystallinity so that the full width of half maximum of 003 diffraction peak in X-ray diffraction using CuKα ray is in a range of 0.15° to 0.18°.

3. A secondary battery of claim 2. wherein said electrolyte is a non-aqueous electrolyte.

4. A secondary battery of claim 2. wherein the potential of said positive electrode in charged state is in a range of 4.2 V to 4.5 V to the redox potential of lithium.

5. A secondary battery of claim 2, wherein said positive electrode has said powder of said lithium cobalt oxide and bonding means for bonding said powder.

6. A secondary battery of claim 2, wherein said lithium cobalt oxide is produced by reaction of Li₂CO₃ and Co₃O₄, and the molar ratio of cobalt in Co₃O₄ to lithium in Li₂CO₃ is in a range of 0.96 to 1.04.

## Patentansprüche

1. Aktives Material für den Einsatz in einer positiven Elektrode einer Batterie mit Lithiumkobaltoxid, das aus Lithium, Kobalt und Sauerstoff besteht, wobei das Lithiumkobaltoxid ein Pulver mit einer mittleren Teilchengröße im Bereich von 5 µm bis 20 µm ist, das Lithiumkobaltoxid eine chemische Zusammensetzung aufweist, bei der das Molverhältnis des Kobalts zu dem Lithium im Bereich von 0,96 bis 1,04 liegt und das Lithiumkobaltoxid eine Kristallinität aufweist, bei der die volle Breite des halben Maximums der 003-Beugungsspitze bei Röntgenbeugung unter Verwendung eines CuKα-Strahls in einem Bereich von 0,15° bis 0,18° liegt.

2. eine Sekundärbatterie, die eine positive Elektrode mit Lithiumkobaltoxid, das aus Lithium, Kobalt und Sauerstoff besteht, eine negative Elektrode, die das Lithium einschließen und freigeben kann, sowie ein Elektrolyt umfasst, wobei das Lithiumkobaltoxid ein Pulver ist und das Pulver eine mittlere Teilchengröße in einem Bereich von 5 µm bis 25 µm hat, und das Lithiumkobaltoxid eine chemische Zusammensetzung aufweist, bei der das Molverhältnis des Kobalts zu dem Lithium im Bereich von 0,96 bis 1,04 liegt und das Lithiumkobaltoxid eine Kristallinität aufweist, bei der die volle Breite des halben Maximums der 003-Beugungsspitze bei der Röntgenbeugung unter Verwendung eines CuKα-Strahls in einem Bereich von 0,15° bis 0,18° liegt.

3. Sekundärbatterie nach Anspruch 2, wobei das Elektrolyt ein nichtwässriges Elektrolyt ist.

4. Sekundärbatterie nach Anspruch 2, wobei das Potential der positiven Elektrode in geladenem Zustand in einem Bereich von 4,2 V bis 4,5 V zum Redoxpotential von Lithium liegt.

5. Sekundärbatterie nach Anspruch 2, wobei die positive Elektrode das Pulver aus Lithiumkobaltoxid sowie ein Bindemittel zum Binden des Pulvers aufweist.

6. Sekundärbatterie nach Anspruch 2, wobei das Lithiumkobaltoxid durch die Reaktion von Li₂CO₃ sowie Co₃O₄ erzeugt wird und das Molverhältnis von Kobalt in Co₃O₄ zu Lithium in Li₂CO₃ im Bereich von 0,96 bis 1,04 liegt.

## Revendications

1. Matière active pour utilisation dans une électrode positive d'une batterie comportant de l'oxyde de cobalt et de lithium, qui est composé de lithium, de cobalt et d'oxygène, dans laquelle ledit oxyde de lithium et de cobalt est une poudre ayant une taille moyenne de particule dans la fourchette de 5 µm à 25 µm, ledit oxyde de cobalt et de lithium a une composition chimique dans laquelle le rapport molaire dudit cobalt audit lithium est dans la fourchette de 0,96 à 1,04, et ledit oxyde de cobalt et de lithium a une cristallinité telle que la largeur totale à mi-hauteur du pic de diffraction de 003 en diffraction aux rayons X utilisant le rayonnement CuKα est dans la fourchette de 0,15° à 0,18°.

2. Batterie secondaire comprenant une électrode positive comportant de l'oxyde de cobalt et de lithium composé de lithium, de cobalt et d'oxygène, une électrode négative capable d'intercaler et de désintercaler le lithium, et un électrolyte, dans laquelle ledit oxyde de lithium et de cobalt est de la poudre, ladite poudre a une taille moyenne de particule dans la fourchette de 5 µm à 25 µm, ledit oxyde de cobalt et de lithium a une composition chimique dans laquelle le rapport molaire dudit cobalt audit lithium est dans la fourchette de 0,96 à 1,04, et ledit oxyde de cobalt et de lithium a une cristallinité telle que la largeur totale à mi-hauteur du pic de diffraction de 003 en diffraction aux rayons X utilisant le rayonnement CuKα est dans la fourchette de 0,15° à 0,18°.

3. Batterie secondaire selon la revendication 2, dans laquelle ledit électrolyte est un électrolyte non aqueux.

4. Batterie secondaire selon la revendication 2, dans laquelle le potentiel de ladite électrode positive à l'état chargé est dans une fourchette de 4,2 V à 4,5 V par rapport au potentiel d'oxydoréduction du lithium.

5. Batterie secondaire selon la revendication 2, dans laquelle ladite électrode positive comporte ladite poudre dudit oxyde de lithium et de cobalt et un moyen de liaison destiné à lier ladite poudre.

6. Batterie secondaire selon la revendication 2, dans laquelle ledit oxyde de lithium et de cobalt est produit par réaction de Li₂CO₃ et de Co₃O₄, et dans laquelle le rapport molaire de cobalt dans Co₃O₄ au lithium dans Li₂CO₃ est dans la fourchette de 0,96 à 1,04.
